(19) Europäisches Patentamt
European Patent Office
Office européen des brevets

(11) **EP 4 625 882 A1**

(12) **EUROPEAN PATENT APPLICATION**
published in accordance with Art. 153(4) EPC

(43) Date of publication:
**01.10.2025 Bulletin 2025/40**

(21) Application number: **23915246.5**

(22) Date of filing: **09.01.2023**

(51) International Patent Classification (IPC):
*H04L 9/32* *(2006.01)*

(52) Cooperative Patent Classification (CPC):
**H04L 9/32**

(86) International application number:
**PCT/CN2023/071325**

(87) International publication number:
**WO 2024/148464 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **LI, Bo
Hangzhou, Zhejiang 310058 (CN)**
• **DENG, Shuiguang
Hangzhou, Zhejiang 310058 (CN)**

• **ZHANG, Yi
Hangzhou, Zhejiang 310058 (CN)**
• **QIN, Zhen
Hangzhou, Zhejiang 310058 (CN)**
• **CHENG, Guanjie
Hangzhou, Zhejiang 310058 (CN)**
• **YAN, Xueqiang
Shenzhen, Guangdong 518129 (CN)**
• **ZHAO, Mingyu
Shenzhen, Guangdong 518129 (CN)**
• **XI, Yan
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **DATA STORAGE METHOD AND RELATED DEVICE**

(57)     A data storage method and a related device are provided. The method includes: A first node first encrypts first data to obtain encrypted data, so that confidentiality of data can be effectively ensured. Then, a second node splits the encrypted data into P fragments. P third nodes store the P fragments, that is, one third node stores one fragment. The encrypted data may be recovered based on at least M fragments in the P fragments. Therefore, even if some nodes in the P third nodes are attacked, the encrypted data may still be recovered based on the at least M fragments in the P fragments, to effectively ensure integrity of stored data.

FIG. 2

## Description

## TECHNICAL FIELD

This application relates to the field of communication technologies, and in particular, to a data storage method and a related device.

## BACKGROUND

With rapid development of communication technologies, internet of things technologies, and edge computing technologies, more devices have data collection and data processing capabilities. A distributed storage network stores data on a plurality of independent devices (or storage nodes) in a dispersed manner. The distributed storage network has an expandable system structure and uses a plurality of devices to share storage loads. This improves system reliability, availability, and access efficiency, and is also easy to expand. However, how to ensure integrity and confidentiality of data stored in the distributed storage network is a problem that needs to be resolved.

## SUMMARY

This application provides a data storage method and a related device, to effectively ensure integrity and confidentiality of data.

According to a first aspect, this application provides a data storage method. The method is applied to a first node, and the first node is a node having a data storage requirement.

The data storage method includes the following steps: A first node encrypts first data to obtain encrypted data. The first node sends a data storage request to a second node. The second node is any node in a distributed storage network. The data storage request includes the encrypted data. The first node receives feedback information. The feedback information indicates that P third nodes have stored P fragments, and the P fragments are obtained by splitting the encrypted data. At least M fragments in the P fragments are used to recover the encrypted data. The P third nodes are nodes in the distributed storage network. P and M are positive integers greater than 1, and M is less than P.

In this solution, the first node first encrypts the first data to obtain the encrypted data, so that confidentiality of data can be effectively ensured. Then, the second node splits the encrypted data into the P fragments. The P third nodes store the P fragments, that is, each third node stores one fragment. The encrypted data may be recovered based on the at least M fragments in the P fragments. Therefore, even if some nodes in the P third nodes are attacked, the encrypted data may still be recovered based on the at least M fragments in the P fragments, to effectively ensure integrity of stored data.

With reference to a possible implementation of the first aspect, the data storage method further includes the following step: The first node sends P sub-keys to the P third nodes. The P sub-keys are obtained by splitting a first key used to encrypt the first data, and at least M sub-keys in the P sub-keys are used to recover the first key.

Therefore, in this application, when the P third nodes have stored the P fragments, the first node sends the P sub-keys to the P third nodes, and each third node stores one sub-key. When sub-keys stored in some nodes in the P third nodes are lost, the encrypted data cannot be decrypted by using a single sub-key. Therefore, according to the solution of this application, security of the first key can be effectively ensured, and confidentiality of the stored data can be further ensured.

With reference to a possible implementation of the first aspect, the data storage request further includes a data name of the first data, and the data name corresponds to a data digest of the encrypted data.

Therefore, in this application, the data storage request sent by the first node to the second node may further include the data name of the first data, and the data name corresponds to the data digest of the encrypted data. In this way, the second node may obtain the data digest of the encrypted data based on the data name of the first data. The second node may verify, based on the data digest of the encrypted data, correctness of the encrypted data received by the second node, that is, determine whether the encrypted data has been tampered with, to ensure correctness of the stored data.

With reference to a possible implementation of the first aspect, the data storage method further includes the following step: The first node sends a data registration request to a first network, where the data registration request includes the data name of the first data and the data digest of the encrypted data.

Therefore, in this application, the first node sends the data registration request to the first network, and the first network may store, in response to the data registration request, data carried in the request, that is, the first network stores a correspondence between the data name of the first data and the data digest of the encrypted data. In this way, the second node may obtain the data digest of the corresponding encrypted data from the first network based on the data name of the first data.

With reference to a possible implementation of the first aspect, the data registration request further includes first indication information, the first indication information is used to determine P, and the first indication information corresponds to the data name.

Therefore, in this application, the first network may further store a correspondence between the data name of the first data and the first indication information. In this way, the second node may obtain the corresponding first indication information based on the data name of the first data, determine P based on the first indication information, and then split the encrypted data based on P.

With reference to a possible implementation of the first aspect, the data storage method further includes the following step: The first node receives second indication information. The second indication information indicates that the P third nodes have stored the P sub-keys. The first node sends third indication information to the first network, where the third indication information indicates that storage of the first data is completed, and the third indication information corresponds to the data name.

Therefore, in this application, after receiving the second indication information, the first node sends the third indication information to the first network, so that the first network may update a storage status of the first data based on the third indication information, and a data requester may learn from the first network that the first data has been stored and is in a requestable state.

According to a second aspect, this application further provides a data storage method. The method is applied to a second node, and the second node is any node in a distributed storage network.

Specifically, the data storage method includes the following steps: The second node receives a data storage request sent by a first node. The data storage request includes encrypted data, and the encrypted data is obtained by the first node by encrypting first data. The second node splits the encrypted data into P fragments. At least M fragments in the P fragments are used to recover the encrypted data, P and M are positive integers greater than 1, and M is less than P. The second node determines P third nodes in the distributed storage network. The second node sends the P fragments to the P third nodes respectively.

In this solution, the second node splits the encrypted data into the P fragments. Then, the P third nodes store the P fragments, that is, one third node stores one fragment. The encrypted data may be recovered based on the at least M fragments in the P fragments. Therefore, even if some nodes in the P third nodes are attacked, the encrypted data may still be recovered based on the at least M fragments in the P fragments, to effectively ensure integrity of stored data.

With reference to a possible implementation of the second aspect, that the second node determines the P third nodes in the distributed storage network includes: The second node determines the P third nodes based on a first value. The first value includes any one of the following: a data digest of the encrypted data, a first preset value, a first data digest, or a value stored in a distributed ledger technology DLT network, and the first data digest is a data digest of data stored in the DLT network. The first value may alternatively be a digest of other data or another value provided that the other data or the another value can be learned of by each node in the distributed storage network.

Therefore, in this application, the P third nodes configured to store data in the distributed storage network may be determined based on the first value, where P is a positive integer greater than 1, and a method for determining the P third nodes is very convenient and effective.

With reference to a possible implementation of the second aspect, an identity ID of an $i^{th}$ third node in the P third nodes is a hash operation value of a second value. The second value is a sum of an ID of an $(i-1)^{th}$ second node and a second preset value, or the second value is a sum of an ID of an $(i-1)^{th}$ second node and a preset function value, and the preset function value is related to i. An ID of a $1^{st}$ third node in the P third nodes is a hash operation value of the first value.

With reference to a possible implementation of the second aspect, the data storage request further includes a data name of the first data, and the data storage method further includes the following steps: The second node obtains, based on the data name, the data digest of the encrypted data corresponding to the data name. The second node verifies correctness of the encrypted data based on the data digest.

Therefore, in this application, the data storage request sent by the first node to the second node may further include the data name of the first data, and the data name corresponds to the data digest of the encrypted data. In this way, the second node may obtain the data digest of the encrypted data based on the data name of the first data. The second node may verify, based on the data digest of the encrypted data, correctness of the encrypted data received by the second node, that is, determine whether the encrypted data has been tampered with, to ensure correctness of the stored data.

With reference to a possible implementation of the second aspect, the data storage method further includes the following step: The second node obtains, based on the data name, first indication information corresponding to the data name. The first indication information is used to determine P.

Therefore, in this application, the second node may obtain the corresponding first indication information based on the data name of the first data, determine P based on the first indication information, and then split the encrypted data based on P.

With reference to a possible implementation of the second aspect, that the second node obtains, based on the data name, the data digest of the encrypted data corresponding to the data name includes: The second node sends a digest request to a first network, where the digest request includes the data name. The second node receives the data digest that is of the encrypted data corresponding to the data name and that is sent by the first network.

Therefore, in this application, the second node may send the digest request to the first network, to request to obtain the data digest of the encrypted data corresponding to the data name of the first data.

With reference to a possible implementation of the second aspect, that the second node obtains, based on the data name, the first indication information corresponding to the data name includes: The second node obtains, from the first network based on the data name, the first indication information corresponding to the data name.

Therefore, in this application, the second node may request, from the first network, to obtain the first indication information corresponding to the data name of the first data. For example, the first network may send both the data digest of the encrypted data and the first indication information to the second node in response to the digest request. For another example, the second node may alternatively initiate another request to the first network, to obtain the first indication information.

According to a third aspect, this application further provides a data storage method, and the method is applied to a data storage system. The system includes a first node, a second node, and a third node, and the first node is a node having a data storage requirement.

Specifically, the data storage method includes the following steps: The first node encrypts first data to obtain encrypted data. The first node sends a data storage request to the second node. The data storage request includes the encrypted data, and the second node is any node in a distributed storage network. The second node splits the encrypted data into P fragments. At least M fragments in the P fragments are used to recover the encrypted data. The second node determines P third nodes in the distributed network, and sends the P fragments to the P third nodes respectively. P and M are positive integers greater than 1, and M is less than P. The P third nodes are nodes in the distributed storage network. Each of the P third nodes stores one of the P fragments.

In this solution, the first node first encrypts the first data to obtain the encrypted data, so that confidentiality of data can be effectively ensured. Then, the second node splits the encrypted data into the P fragments. The P third nodes store the P fragments, that is, one third node stores one fragment. The encrypted data may be recovered based on the at least M fragments in the P fragments. Therefore, even if some nodes in the P third nodes are attacked, the encrypted data may still be recovered based on the at least M fragments in the P fragments, to effectively ensure integrity of stored data.

With reference to a possible implementation of the third aspect, the data storage method further includes the following steps: The first node receives feedback information. The feedback information indicates that the P third nodes have stored the P fragments. The first node sends P sub-keys to the P third nodes. The P sub-keys are obtained by splitting a first key used to encrypt the first data, and at least M sub-keys in the P sub-keys are used to recover the first key. Each of the P third nodes stores one of the P sub-keys.

Therefore, in this application, after receiving the feedback information, the first node sends the P sub-keys to the P third nodes, so that one third node stores one sub-key. When sub-keys stored in some nodes in the P third nodes are lost, the encrypted data cannot be decrypted by using a single sub-key. Therefore, according to the solution of this application, security of the first key can be effectively ensured, and confidentiality of the stored data can be further ensured.

With reference to a possible implementation of the third aspect, the data storage request further includes a data name of the first data, and the data storage method further includes the following steps: The second node obtains, based on the data name, a data digest of the encrypted data corresponding to the data name. The second node verifies correctness of the encrypted data based on the data digest.

Therefore, in this application, the second node may verify, based on the data digest of the encrypted data, correctness of the encrypted data received by the second node, that is, determine whether the encrypted data has been tampered with, to ensure correctness of the stored data.

With reference to a possible implementation of the third aspect, the data storage method further includes the following step: The second node obtains, based on the data name, first indication information corresponding to the data name, where the first indication information is used to determine P.

Therefore, in this application, the second node may obtain the corresponding first indication information based on the data name of the first data, determine P based on the first indication information, and then split the encrypted data based on P.

With reference to a possible implementation of the third aspect, the data storage system further includes a first network, and that the second node obtains, based on the data name, the data digest of the encrypted data corresponding to the data name includes: The second node sends a digest request to the first network. The digest request includes the data name. The second node receives the data digest that is of the encrypted data corresponding to the data name and that is sent by the first network.

Therefore, in this application, the second node may obtain the data digest of the corresponding encrypted data from the first network based on the data name of the first data.

With reference to a possible implementation of the third aspect, the second node receives the first indication information that corresponds to the data name and that is sent by the first network in response to the digest request.

Therefore, in this application, the first network may send both the data digest of the encrypted data and the first indication information to the second node in response to the digest request.

With reference to a possible implementation of the third aspect, the data storage method further includes the following step: The first node sends a data registration request to the first network, where the data registration request includes the data name of the first data and the data digest of the encrypted data.

Therefore, in this application, the first node sends the data registration request to the first network, and the first network may store, in response to the data registration request, data carried in the request.

With reference to a possible implementation of the third aspect, the data registration request further includes the first indication information used to determine P.

Therefore, in this application, the first network may further store a correspondence between the data name of the first data and the first indication information.

With reference to a possible implementation of the third aspect, that the second node determines the P third nodes in the distributed storage network includes: The second node determines the P second nodes based on a first value. The first value includes any one of the following: the data digest of the encrypted data, a first preset value, a first data digest, or a value stored in a distributed ledger technology DLT network, and the first data digest is a data digest of data stored in the DLT network.

Therefore, in this application, the P third nodes configured to store data in the distributed storage network may be determined based on the first value, where P is a positive integer greater than 1, and a method for determining the P third nodes is very convenient and effective.

With reference to a possible implementation of the third aspect, an identity ID of an $i^{th}$ third node in the P third nodes is a hash operation value of a second value. The second value is a sum of an ID of an $(i-1)^{th}$ third node and a second preset value, or the second value is a sum of an ID of an $(i-1)^{th}$ third node and a preset function value, and the preset function value is related to i. An ID of a $1^{st}$ third node in the P third nodes is a hash operation value of the first value.

According to a fourth aspect, this application further provides a data storage method, and the method is applied to a distributed storage network.

Specifically, the data storage method includes the following step: A second node receives a data storage request sent by a first node. The second node is any node in the distributed storage network, the first node is a node having a data storage requirement, the data storage request includes encrypted data, and the encrypted data is obtained by the first node by encrypting first data. The second node splits the encrypted data into P fragments, where at least M fragments in the P fragments are used to recover the encrypted data. The second node determines P third nodes in the distributed network, and sends the P fragments to the P third nodes respectively, where P and M are positive integers greater than 1, and M is less than P. The P third nodes are nodes in the distributed storage network. Each of the P third nodes stores one of the P fragments.

In this solution, the second node splits the encrypted data into the P fragments. Then, the P third nodes store the P fragments, that is, one third node stores one fragment. The encrypted data may be recovered based on the at least M fragments in the P fragments. Therefore, even if some nodes in the P third nodes are attacked, the encrypted data may still be recovered based on the at least M fragments in the P fragments, to effectively ensure integrity of stored data.

With reference to a possible implementation of the fourth aspect, the data storage method further includes the following step: Each of the P third nodes receives one of P sub-keys, and one third node stores one sub-key. The P sub-keys are obtained by splitting a first key used to encrypt the first data, and at least M sub-keys in the P sub-keys are used to recover the first key. The P sub-keys are sent by the first node after the first node receives feedback information, where the feedback information indicates that the P third nodes have stored the P fragments.

With reference to a possible implementation of the fourth aspect, that the second node determines the P third nodes in the distributed storage network includes: The second node determines the P third nodes based on a first value. The first value includes any one of the following: a data digest of the encrypted data, a first preset value, a first data digest, or a value stored in a distributed ledger technology DLT network, and the first data digest is a data digest of data stored in the DLT network. The first value may alternatively be a digest of other data or another value provided that the other data or the another value can be learned of by each node in the distributed storage network.

With reference to a possible implementation of the fourth aspect, an identity ID of an $i^{th}$ third node in the P third nodes is a hash operation value of a second value. The second value is a sum of an ID of an $(i-1)^{th}$ second node and a second preset value, or the second value is a sum of an ID of an $(i-1)^{th}$ second node and a preset function value, and the preset function value is related to i. An ID of a $1^{st}$ third node in the P third nodes is a hash operation value of the first value.

With reference to a possible implementation of the fourth aspect, the data storage request further includes a data name of the first data, and the data storage method further includes the following steps: The second node obtains, based on the data name, the data digest of the encrypted data corresponding to the data name. The second node verifies correctness of the encrypted data based on the data digest.

With reference to a possible implementation of the fourth aspect, the data storage method further includes the following step: The second node obtains, based on the data name, first indication information corresponding to the data name. The first indication information is used to determine P.

With reference to a possible implementation of the fourth aspect, that the second node obtains, based on the data name, the data digest of the encrypted data corresponding to the data name includes: The second node sends a digest request to a first network. The digest request includes the data name. The second node receives the data digest that is of the encrypted data corresponding to the data name and that is sent by the first network in response to the digest request.

With reference to a possible implementation of the fourth aspect, that the second node obtains, based on the data name, the first indication information corresponding to the data name includes: The second node obtains, from the first network based on the data name, the first indication information corresponding to the data name.

According to a fifth aspect, this application further provides a node determining method. The method may be applied to a node determining device or a chip in the node determining device.

Specifically, the node determining method includes the following steps: splitting a first task into P subtasks, where P is a positive integer greater than 1; and determining P nodes in a distributed storage network based on a first value, where the first value includes any one of the following: a digest corresponding to data to be processed by the first task, a first preset value, a first data digest, or a value stored in a distributed ledger technology DLT network, and the first data digest is a data digest of data stored in the DLT network.

In this solution, the P nodes configured to execute the P sub-tasks in the distributed storage network may be determined based on the first value, where P is a positive integer greater than 1, and a method for determining the P nodes is very convenient and effective. The first task may include a storage task or a computing task.

With reference to a possible implementation of the fifth aspect, an identity ID of an $i^{th}$ node in the P nodes is a hash operation value of a second value, the second value is a sum of an ID of an $(i-1)^{th}$ node and a second preset value, or the second value is a sum of an ID of an $(i-1)^{th}$ node and a preset function value, and the preset function value is related to i. An ID of a $1^{st}$ node in the P nodes is a hash operation value of the first value.

With reference to a possible implementation of the fifth aspect, the node determining method further includes: sending the P sub-tasks to the P nodes respectively, so that one node executes one sub-task.

According to a sixth aspect, this application further provides a first node. The first node includes an encryption module, a sending module, and a receiving module.

The encryption module is configured to encrypt first data to obtain encrypted data.

The sending module is configured to send a data storage request to a second node. The second node is any node in a distributed storage network, and the data storage request includes the encrypted data.

The receiving module is configured to receive feedback information. The feedback information indicates that P third nodes have stored P fragments, and the P fragments are obtained by splitting the encrypted data. At least M fragments in the P fragments are used to recover the encrypted data. The P third nodes are nodes in the distributed storage network, P and M are positive integers greater than 1, and M is less than P.

According to a seventh aspect, this application further provides a second node, and the second node is any node in a distributed storage network. The second node includes a receiving module, a splitting module, a determining module, and a sending module.

The receiving module is configured to receive a data storage request sent by a first node. The data storage request includes encrypted data, and the encrypted data is obtained by the first node by encrypting first data.

The splitting module is configured to split the encrypted data into P fragments. At least M fragments in the P fragments are used to recover the encrypted data, P and M are positive integers greater than 1, and M is less than P.

The determining module is configured to determine P third nodes in the distributed storage network.

The sending module is configured to send the P fragments to the P third nodes respectively.

According to an eighth aspect, this application further provides a data storage system. The system includes a first node, a second node, and a third node.

The first node is configured to encrypt first data to obtain encrypted data, and send a data storage request to the second node. The data storage request includes the encrypted data, and the second node is any node in a distributed storage network.

The second node is configured to split the encrypted data into P fragments, where at least M fragments in the P fragments are used to recover the encrypted data, P and M are positive integers greater than 1, and M is less than P, determine P third nodes in a distributed storage network, and send the P fragments to the P third nodes respectively.

The third node is configured to store one of the P fragments.

According to a ninth aspect, this application further provides a node determining device. The node determining device includes a splitting module and a determining module.

The splitting module is configured to split a first task into P sub-tasks, where P is a positive integer.

The determining module is configured to determine P nodes in a distributed storage network based on a first value, where the first value includes any one of the following: a digest corresponding to data to be processed by the first task, a first preset value, a first data digest, or a value stored in a distributed ledger technology DLT network, and the first data digest is a data digest of data stored in the DLT network.

With reference to a possible implementation of the ninth aspect, an identity ID of an $i^{th}$ node in the P nodes is a hash operation value of a second value, the second value is a sum of an ID of an $(i-1)^{th}$ node and a preset value, or the second value is a sum of an ID of an $(i-1)^{th}$ node and a preset function value, and the preset function value is related to i. An ID of a 1st node in the P nodes is a hash operation value of the first value.

According to a tenth aspect, this application further provides a communication apparatus. The communication apparatus includes one or more processors and one or more memories, the one or more memories are coupled to the one or more processors, the one or more memories are configured to store computer program code, the computer program code includes computer instructions, and when the one or more processors execute the computer instructions, the communication apparatus is enabled to perform the method according to any one of the first aspect, the second aspect, the third aspect, the fourth aspect, or the fifth aspect.

According to an eleventh aspect, this application further provides a computer-readable storage medium. The computer-readable storage medium stores instructions, and when the instructions are executed by a processor, the method according to any one of the first aspect, the second aspect, the third aspect, the fourth aspect, or the fifth aspect is implemented.

According to a twelfth aspect, this application further provides a computer program product, including a computer program. When the computer program is run on a processor, the method according to any one of the first aspect, the second aspect, the third aspect, the fourth aspect, or the fifth aspect is implemented.

According to a thirteenth aspect, this application provides a chip system. The chip system is applied to a communication apparatus, the chip system includes one or more processors, and the processor is configured to invoke computer instructions to enable the communication apparatus to perform the method according to any one of the first aspect, the second aspect, the third aspect, the fourth aspect, or the fifth aspect.

## BRIEF DESCRIPTION OF DRAWINGS

FIG. 1 is a diagram of a structure of a data storage system according to an embodiment of this application;
FIG. 2 is a flowchart of a data storage method according to an embodiment of this application;
FIG. 3A is an interaction flowchart of a data storage method according to an embodiment of this application;
FIG. 3B is a diagram of erasure coding according to an embodiment of this application;
FIG. 3C is a diagram of erasure coding in a fault case according to an embodiment of this application;
FIG. 3D is a diagram of an operation of erasure coding in a fault case according to an embodiment of this application;
FIG. 3E is a diagram of recovering data by using erasure coding according to an embodiment of this application;

FIG. 4 is a schematic flowchart of a node determining method according to an embodiment of this application;
FIG. 5 is a diagram of a structure of a first node according to an embodiment of this application;
FIG. 6 is a diagram of a structure of a second node according to an embodiment of this application;
FIG. 7 is a diagram of a structure of a node determining device according to an embodiment of this application; and
FIG. 8 is a diagram of a structure of a communication apparatus according to an embodiment of this application.

## DESCRIPTION OF EMBODIMENTS

Terms used in the following embodiments of this application are merely intended to describe specific embodiments, but are not intended to limit this application. As used in this specification and the claims of this application, a singular expression form, "one", "a", "said", "foregoing", "the", or "this", is intended to also include a plural expression form, unless clearly indicated to the contrary in the context. It should be further understood that the term "and/or" used in this application means and includes any or all possible combinations of one or more listed items.

In the following, the terms "first" and "second" are merely intended for the purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

Because embodiments of this application are related to a method, for ease of understanding, the following first describes related terms and concepts in embodiments of this application.

(1) Distributed storage network

In embodiments of this application, the distributed storage network is a data storage network including several distributed storage nodes (nodes for short). For example, a distributed hash table (Distributed Hash Table, DHT) network is a type of distributed storage network, and a storage node in the network may be a base station and/or a core network element. For another example, the storage node in the distributed storage network may alternatively be an edge server.

The distributed network storage network has an expandable system structure and uses a plurality of devices to share storage loads. This improves system reliability, availability, and access efficiency, and is also easy to expand.

**(2) Distributed ledger technology (Distribution Leger Technology, DLT) network**

The distributed ledger technology (DLT) network is a decentralized data management architecture. There are several nodes in the entire network. Each node replicates and stores an identical copy of a ledger. When data in the ledger changes, all nodes perform update independently, and determine a correct ledger copy by using a consensus algorithm. After a consensus is reached, all the nodes perform synchronization based on the correct ledger copy. In addition, the DLT network also uses technologies such as an encryption algorithm and a digital signature to improve system security. The DLT network may be classified based on used data structures, such as a blockchain and a directed acyclic graph; or may be classified based on used consensus algorithms, such as proof of work (Proof of Work, PoW) and proof of stake (Proof of Stake, PoS). For example, the node in the DLT network may be a base station and/or a core network element.

**(3) Information dispersal algorithm**

In a coding theory, there is a forward error correction (FEC) coding scheme, also referred to as erasure coding. In this technology, lost k-byte data in original data can be recovered from n pieces of information including encoded bytes.

In the information dispersal algorithm, P fragments are obtained after original data is processed by using an erasure coding technology, where P = M + N, and M is less than or equal to N. The original data can be recovered based on any M fragments. The information dispersal algorithm includes a Reed-Solomon (Reed-Solomon, RS) erasure coding algorithm or a locally repairable code (Locally Repairable Codes, LRC) algorithm. The LRC algorithm is a local parity coding method. A core idea of the LRC algorithm is as follows: Parity blocks (parity block) are classified into a global parity (global parity) block and a local parity (local reconstruction parity) block. When a fault is recovered, calculation is performed by group.

**(4) Threshold key sharing algorithm**

The threshold key sharing algorithm means that an original key is processed to obtain P sub-keys and the original key can be obtained by using a combination of M or more sub-keys.

The following describes methods in embodiments of this application with reference to the foregoing terms.

In a conventional technology, how to ensure integrity and confidentiality of data stored in a distributed storage network is a problem that needs to be resolved. Therefore, an embodiment of this application provides a data storage method, and integrity and confidentiality of stored data can be effectively ensured by using the method.

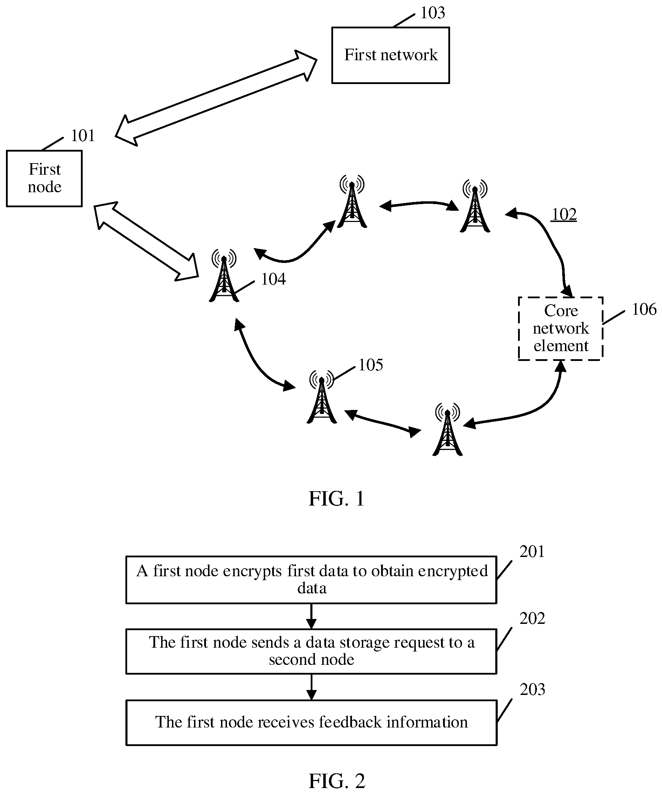

The method in this embodiment of this application may be applied to a data storage system. FIG. 1 is a diagram of a structure of a data storage system according to an embodiment of this application. The data storage system includes a first node 101 and a distributed storage network 102. Optionally, the data storage system further includes a first network 103. The first node 101, the distributed storage network 102, and the first network 103 are communicatively connected in a wired manner and/or a wireless manner. Specifically, the distributed storage network 102 includes several nodes communicatively connected in the wired manner and/or the wireless manner. The distributed storage network 102 includes a second node 104 and P third nodes 105. The second node 104 is any node in the distributed storage network 102, that is, the second node 104 may be one of the P third nodes 105. For example, in FIG. 1, the node in the distributed storage network 102 is a base station, such as the second node 104 and the third node 105. For another example, the node in the distributed storage network 102 may be a core network element 106. For example, the core network element 106 includes at least one of the following: an access and mobility management function (access and mobility management function, AMF) network element, a session management function (session management function, SMF) network element, a user plane function (user plane function, UPF) network element, a mobility management entity (mobility management entity, MME) network element, a serving gateway (serving gateway, SGW), or a packet data network gateway (PDN gateway, PGW). A full name of PDN is packet data network.

The first node 101 is a node having a data storage requirement. For a specific process in which the first node 101 stores data in the distributed storage network 102, refer to specific descriptions in FIG. 2. Details are not described herein.

The following first describes an example data storage method provided in embodiments of this application.

FIG. 2 is a flowchart of a data storage method according to an embodiment of this application. The data storage method includes the following steps.

201: A first node encrypts first data to obtain encrypted data.

Specifically, the first node is a node having a data storage requirement. Optionally, the first node encrypts the first data by using a first key, to obtain the encrypted data. The first key may be an asymmetric key or a symmetric key. For example, the first node may obtain the first key from another device. For another example, the first node may randomly generate a symmetric key, and then encrypt the first data by using the symmetric key.

The first node may include a terminal device or an access network device. The terminal device or the access network device is not limited to a terminal device or an access network device in a long term evolution (long term evolution, LTE) system, a long term evolution-advanced (long term evolution-advanced, LTE-A) system, an enhanced long term evolution (enhanced long term evolution-advanced, eLTE) system, a 5th generation (5th Generation, 5G) mobile communication system new radio (New Radio, NR) system, and a future communication network system such as a 6th generation (6th Generation, 6G) mobile communication system.

The terminal device is referred to as a terminal for short, and is also referred to as user equipment (user equipment, UE). The terminal device may include various handheld devices that have a wireless communication function, vehicle-mounted devices, wearable devices, computing devices, or other processing devices connected to a wireless modem, and various forms of terminals, such as a mobile station (mobile station, MS), a terminal (terminal), a soft terminal, an access terminal, a terminal device unit (subscriber unit), a terminal device station, a MS, a remote station, a remote terminal, a mobile device, a terminal device agent, a terminal device apparatus, and the like. For example, the terminal device is a water meter, an electricity meter, or a sensor.

The access network device may have any one of the following alternative words: a radio access network, an access network (access network, AN), where the access network device may be a base station, a next-generation NodeB (gNB), an evolved NodeB (evolved NodeB, eNB), a transmission reception point (transmission reception point, TRP), a central unit (central unit, CU) node, a distribution unit (distributed unit, DU) node, a transmission point (transmission point, TP), a receiving point (receiving point, RP), or the like. This is not limited. In some deployments of the access network device, the CU node may be further divided into a CU-control plane (control plane, CP), a CU-user plane (user plane, UP), and the like. In some other deployments of the access network device, the access network device may alternatively be a radio unit (radio unit, RU) or the like. In some other deployments of the access network device, the access network device may alternatively be an open radio access network (open radio access network, ORAN) architecture or the like. For example, in an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU.

When the first node is an access network device, the access network device receives the first data from the terminal. For example, the terminal may send a data storage request to the access network device, where the data storage request includes the first data. In this way, the terminal may obtain the first data after receiving the data storage request.

202: The first node sends the data storage request to a second node. The second node is any node in a distributed storage network. The data storage request includes the encrypted data.

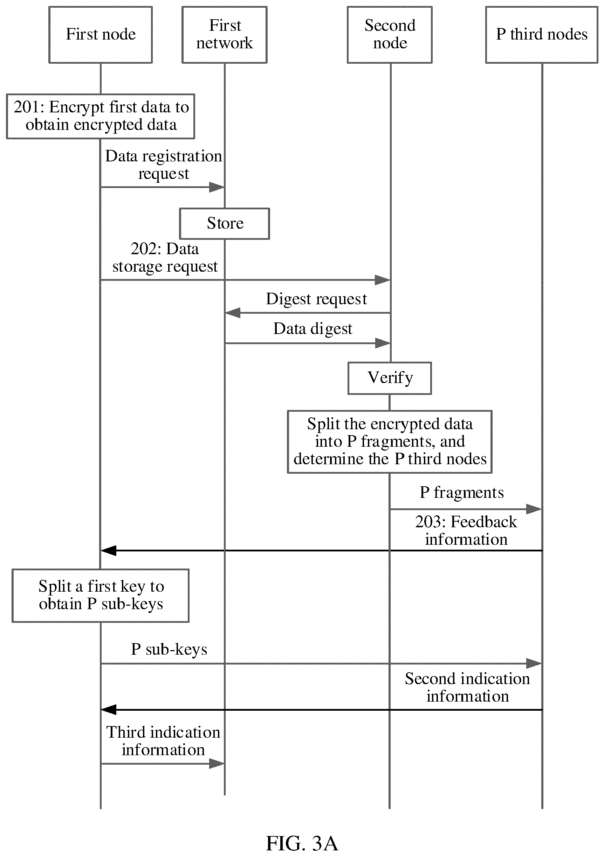

Correspondingly, FIG. 3A is an interaction flowchart of a data storage method according to an embodiment of this application. The second node receives the data storage request sent by the first node. The second node splits or processes the encrypted data to obtain P fragments. At least M fragments in the P fragments are used to recover the encrypted data. The second node determines P third nodes in the distributed storage network. The second node sends the P fragments to the P third nodes respectively. Correspondingly, each third node stores one fragment.

P and M are positive integers greater than 1, and M is less than P.

For example, when the second node splits the encrypted data by using an information dispersal algorithm to obtain the P fragments, the encrypted data may be recovered based on the at least M fragments.

For example, the information dispersal algorithm processes the encrypted data by using an RS erasure coding technology, to obtain the P (P = M + N) fragments. Erasure coding has two parameters M and N, which are denoted as RS(M, N). M is a quantity of source data blocks, and N is a quantity of parity blocks. The M source data blocks form a vector $D$, which is multiplied by a generator matrix $B$ to obtain a data vector. The data vector includes M data blocks and N parity blocks. If one data block is lost, a series of calculation can be performed to recover the lost data block. RS(M, N) can tolerate a loss of a maximum of N blocks (including a data block and a parity block).

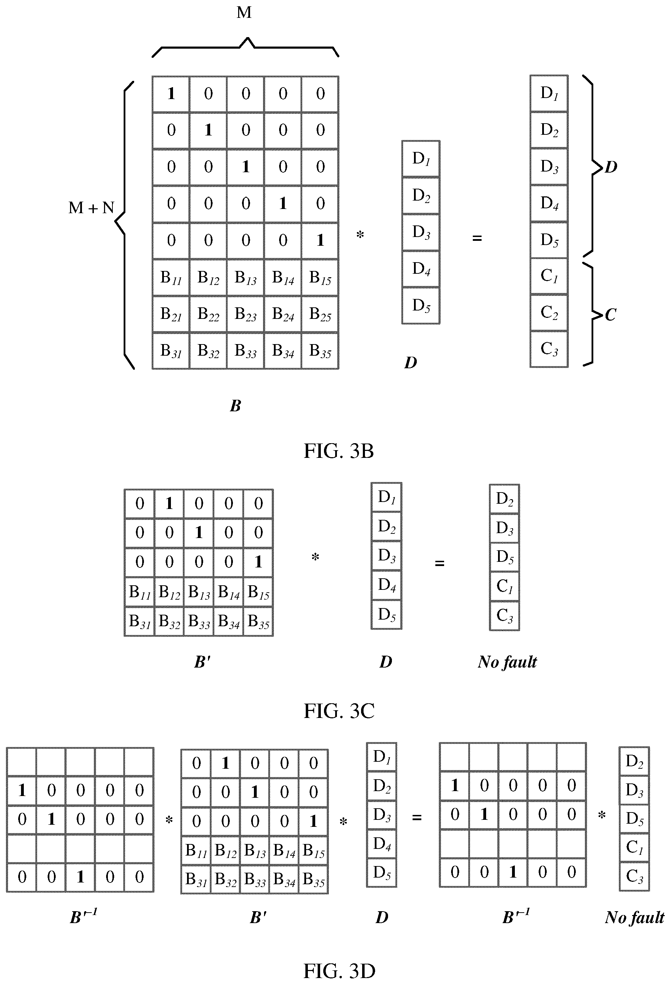

Erasure coding whose redundancy level M + N is 5 + 3 (that is, M is 5 and N is 3) is used as an example for description. FIG. 3B is a diagram of erasure coding according to an embodiment of this application. The M source data blocks $D_1$ to $D_M$ are arranged into a vector $D$ by column, and then an (M + N) M matrix $B$ is constructed, where $B$ is referred to as a distribution matrix. Any M row vectors of the matrix $B$ are independent of each other, that is, an MM matrix formed by the M row vectors is invertible. Matrix vector multiplication $B * D$ is performed to obtain a data vector formed by N parity blocks $C_1$ to $C_N$ and M source data blocks $D_1$ to $D_M$.

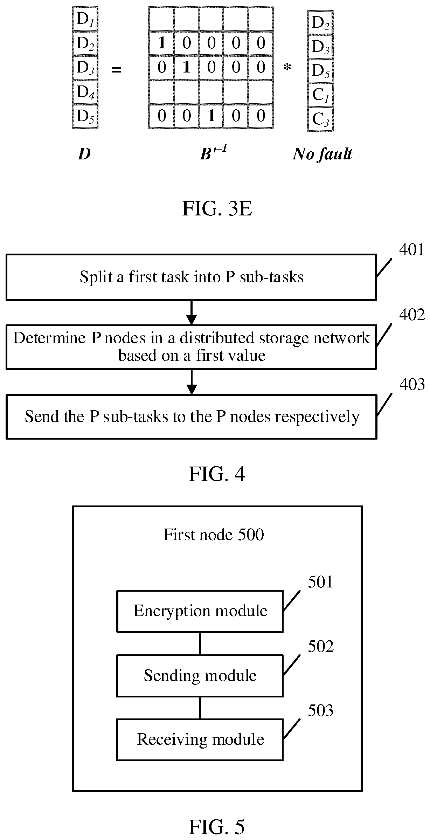

It is assumed that each data block in the data vector is stored in one hard disk. When N hard disks in (M + N) hard disks are faulty, that is, data blocks $D_1$, $D_4$, and $C_2$ in FIG. 3B are lost, the source data blocks $D_1$ to $D_M$ need to be recovered from remaining M data blocks. FIG. 3C is a diagram of erasure coding in a fault case according to an embodiment of this application. Row vectors corresponding to the remaining data blocks are selected from the matrix $B$ to form a new matrix $B'$, and a result of multiplying $B'$ by the vector $D$ is exactly a data vector formed by the data blocks that are not faulty. Because a matrix formed by any M rows of $B$ is invertible, the matrix $B'$ has an inverse matrix that is denoted as $B'^{-1}$. FIG. 3D is a diagram of an operation of erasure coding in a fault case according to an embodiment of this application. Left and right sides of the equation in FIG. 3C are left-multiplied by the matrix $B'^{-1}$. Because $B'^{-1} * B' = E$, and an identity matrix $E$ multiplied by any matrix is equal to the matrix, FIG. 3E may be obtained from FIG. 3D. FIG. 3E is a diagram of recovering data by using erasure coding according to an embodiment of this application. That is, the M source data blocks $D_1$ to $D_M$ may be obtained based on a data vector formed by the inverse matrix $B'^{-1}$ and the data blocks that are not faulty, and data recovery is completed.

For another example, when the second node splits the encrypted data by using another method, to obtain the P fragments, the encrypted data may be recovered based on data of the at least M fragments. The another method is, for example, an LRC algorithm. This is not particularly limited.

After determining the P third nodes, the second node may obtain network identification information of the P third nodes. The network identification information is, for example, an identity (identity document, ID) of the third node or an IP address of the third node.

For example, the second node may send the P fragments to the corresponding third nodes based on the network identification information of the third nodes. For example, the P fragments are ten fragments S1, S2, S3, S4, S5, S6, S7, S8, S9, and S10, and the P third nodes are ten third nodes J1, J2, J3, J4, J5, J6, J7, J8, J9, and J10. The second node sends the fragment S1 to the third node J1, sends the fragment S2 to the third node J2, and sends the fragment S3 to the third node J3, and so on.

For another example, the second node may send the P fragments and the network identification information of the P third nodes to any one of the P third nodes, for example, the third node J6. After obtaining any one of the P fragments, the third node J6 sends remaining (P - 1) fragments to any one of the (P-1) third nodes. The foregoing step is repeatedly performed until fragment sending is completed.

203: The first node receives feedback information. The feedback information indicates that the P third nodes have stored the P fragments, and the P fragments are obtained by the second node by splitting or processing the encrypted data. The P third nodes are nodes in the distributed storage network. P and M are positive integers greater than 1, and M is less than P.

For example, the feedback information includes P pieces of feedback sub-information, and the feedback sub-information indicates that the third node has stored one fragment. Each of the P third nodes sends respective feedback sub-information to the first node, so that the first node learns that the P third nodes have stored the P fragments. Optionally, when sending the feedback sub-information, the third node may further send the network identification information of the third node. Optionally, each of the P third nodes sends respective feedback sub-information to the second node.

For another example, each of the P third nodes sends respective feedback sub-information to the second node. After the second node receives the feedback sub-information of each of the P third nodes, the second node sends one piece of feedback information to the first node, where the piece of feedback information indicates that the P third nodes have stored the P fragments.

In a possible embodiment, the second node sends the network identification information of the P third nodes to the first node. For example, after receiving the P pieces of feedback sub-information, the second node transmits the network identification information of the P third nodes to the first node. In this way, the first node may send information to the P third nodes based on the network identification information of the P third nodes.

In this embodiment, the first node first encrypts the first data to obtain the encrypted data, so that confidentiality of data can be effectively ensured. Then, the second node splits the encrypted data into the P fragments. The P third nodes store the P fragments, that is, each third node stores one fragment. The encrypted data may be recovered based on the at least M fragments in the P fragments. Therefore, even if some nodes in the P third nodes are attacked, the encrypted data may still be recovered based on the at least M fragments in the P fragments, to effectively ensure integrity of stored data.

In addition, in the conventional technology, to back up data, entire data needs to be backed up. However, in this application, backup can be implemented provided that each node stores only one fragment, to effectively reduce backup overheads. Moreover, the solution in this embodiment of this application is a distributed storage solution, so that communication overheads can be reduced.

In a possible implementation, the data storage method further includes: The second node calculates a data digest of each fragment, that is, a fragment digest. Optionally, the second node sends the fragment digest corresponding to the fragment to each third node, so that the third node can verify correctness of the received fragment based on the fragment digest, and determine whether the received fragment is tampered with. Optionally, the second node may send P fragment digests to each third node, so that the third node finds a fragment digest corresponding to the third node, and then verifies correctness of the received fragment based on the fragment digest. Specifically, the third node calculates a fragment digest based on the received fragment, and then compares the fragment digest with the fragment digest corresponding to the third node, to verify correctness of the received fragment. In a possible implementation, that the second node determines the P third nodes in the distributed storage network includes:

The second node determines the P third nodes based on a first value.

The first value includes any one of the following: a data digest of the encrypted data, a first preset value, a first data digest, or a value stored in a DLT network, and the first data digest is a data digest of data stored in the DLT network. For example, the first preset value may be a constant, for example, a value such as 1, 2, or 3. For another example, the first preset value may alternatively be an operation value of any X items in the data digest of the encrypted data, a preset constant, the first data digest, and the value stored in the DLT network. The foregoing operation may be an addition operation, a subtraction operation, or another mathematical operation. This is not particularly limited. X is greater than or equal to 2. The first value may alternatively be a digest of other data or another value provided that the other data or the another value can be learned of by each node in the distributed storage network.

Therefore, in this embodiment of this application, the P third nodes configured to store data in the distributed storage network may be determined based on the first value, where P is a positive integer greater than 1, and the P third nodes can be discovered by using a small amount of data. A method for determining the P third nodes is very convenient and effective.

In a possible implementation, an ID of an $i^{th}$ third node in the P third nodes is a hash (hash) operation value of a second value. The second value is a sum of an ID of an $(i-1)^{th}$ second node and a second preset value, or the second value is a sum of an ID of an $(i-1)^{th}$ second node and a preset function value, and the preset function value is related to i. An ID of a $1^{st}$ third node in the P third nodes is a hash operation value of the first value.

The second preset value may be any constant, for example, 1, 2, or 3. The preset function value may be a function value corresponding to any preset function related to i. The preset function may be a logarithmic function, an exponential function, a linear function, or the like. For example, the preset function is log i, or the preset function is 2i + 6, or the preset function is $2^i$.

For example, the first value is the data digest HF of the encrypted data, and the second preset value is 1. Assuming that P is 10, IDs of the P third nodes are respectively:

$$J1 = \text{hash(HF)},$$

$$J2 = \text{hash}(J1 + 1),$$

..., and

$$J10 = \text{hash}(J9 + 1).$$

In a possible implementation, the data storage request further includes a data name of the first data, and the data name corresponds to the data digest of the encrypted data.

Therefore, in this embodiment of this application, the second node may obtain the data name of the first data from the data storage request, and the data name corresponds to the data digest of the encrypted data. In this way, the second node may obtain, based on the data name of the first data, the data digest (that is, the data digest used for verification) of the encrypted data corresponding to the data name. The second node may verify, based on the data digest of the encrypted data, correctness of the encrypted data received by the second node, that is, determine whether the encrypted data has been tampered with, to ensure correctness of the stored data. Specifically, the second node may calculate the data digest of the received encrypted data, and then compare calculated the data digest with the data digest used for verification. When the two data digests are the same, the second node may determine that the encrypted data is not tampered with.

In a possible implementation, with reference to FIG. 3A, the data storage method further includes the following step:

The first node sends a data registration request to a first network, where the data registration request includes the data name of the first data and the data digest of the encrypted data.

Therefore, in this embodiment of this application, the first node sends the data registration request to the first network, and the first network may store, in response to the data registration request, data carried in the request, to complete data registration, that is, the first network stores a correspondence between the data name of the first data and the data digest of the encrypted data. In this way, the second node may obtain the data digest of the corresponding encrypted data from the first network based on the data name of the first data.

Correspondingly, in step 201, the first node calculates the data digest of the encrypted data.

The first network may be a DLT network or another storage network. This is not particularly limited herein.

In a possible implementation, with reference to FIG. 3A, that the second node obtains, based on the data name, the data digest of the encrypted data corresponding to the data name includes:

The second node sends a digest request to the first network. The digest request includes the data name.

The second node receives the data digest that is of the encrypted data corresponding to the data name and that is sent by the first network.

In a possible implementation, the data registration request further includes first indication information, the first indication information is used to determine P, and the first indication information corresponds to the data name.

Therefore, in this embodiment of this application, the first network may further store a correspondence between the data name of the first data and the first indication information. In this way, the second node may obtain the corresponding first indication information based on the data name of the first data, determine P based on the first indication information, and then split the encrypted data based on P.

In this embodiment of this application, the second node may request, from the first network, the first indication information corresponding to the data name of the first data. For example, the first network may send both the data digest of the encrypted data and the first indication information to the second node in response to the digest request. For another example, the second node may alternatively initiate another request to the first network, to obtain the first indication information.

In a possible implementation, with reference to FIG. 3A, the data storage method further includes the following step:

The first node sends P sub-keys to the P third nodes. The P sub-keys are obtained by splitting the first key used to encrypt the first data, and at least M sub-keys in the P sub-keys are used to recover the first key.

Specifically, after receiving the feedback information, the first node splits the first key to obtain the P sub-keys, and sends the P sub-keys to the P third nodes. For example, when the first node processes the first key by using a threshold key sharing algorithm, to obtain the P sub-keys, assuming that a threshold of the threshold key sharing algorithm is M, the first key may be recovered based on M or more sub-keys.

Correspondingly, each of the P third nodes stores one of the P sub-keys.

For example, when the first key is processed by using the threshold key sharing algorithm, two processes are included: key splitting (split) and key recovery (recover). In the threshold key sharing algorithm, the first key is hidden by using an (M-1)-degree polynomial function, where the (M-1)-degree polynomial function is $a(x) = a_0 + a_1x + a_2x^2 + \cdots + a_{M-1}x^{M-1}$, and the first key is encoded as a constant $a_0$.

Specifically, key splitting means randomly generating these coefficient values $a_1$ to $a_{M-1}$. On an (M-1)-degree polynomial function curve, P different points $\{(x_1, y_1), (x_2, y_2), ..., (x_P, y_P)\}$ are randomly selected, and these points are allocated to the P third nodes. Coordinates obtained by each third node is a key share (secret share), and the key share is a sub-key.

Key recovery (recover) means that M third nodes aggregate key shares, substitute M coordinates into an original function, to determine a unique curve, and may calculate values of $\{a_0, a_1, a_2, ..., a_{M-1}\}$ based on the curve, where $a_0$ is the first key.

In an example, the first node may send the P sub-keys to the P third nodes respectively based on the network identification information of the P third nodes. For example, the P sub-keys are Z1, Z2, Z3, Z4, Z5, Z6, Z7, Z8, Z9, and Z10 respectively. The second node sends the sub-key Z1 to the third node J1, sends the sub-key Z2 to the third node J2, and sends the sub-key Z3 to the third node J3, and so on.

In another example, the first node may first send the P sub-keys to the second node, and then the second node sends the P sub-keys to the P third nodes. A method for sending the P sub-keys to the P third nodes by the second node may be the same as the method for sending the P fragments by the second node. Details are not described herein again.

Therefore, in this embodiment of this application, when the P third nodes have stored the P fragments, the first node sends the P sub-keys to the P third nodes, and one third node stores one sub-key. When sub-keys stored in some nodes in the P third nodes are lost, the encrypted data cannot be decrypted by using a single sub-key. Therefore, according to the solution of this embodiment of this application, security of the first key can be effectively ensured, and confidentiality of the stored data can be further ensured.

In a possible implementation, with reference to FIG. 3A, the data storage method further includes the following steps:

The first node receives second indication information. The second indication information indicates that the P third nodes have stored the P sub-keys.

The first node sends third indication information to the first network, where the third indication information indicates that storage of the first data is completed, and the third indication information corresponds to the data name.

Therefore, in this embodiment of this application, after receiving the second indication information, the first node sends the third indication information to the first network, so that the first network may update a storage status of the first data based on the third indication information, and a data requester may learn from the first network that the first data has been stored and is in a requestable state.

For example, when the first node is an access network device, after receiving the second indication information, the access network device feeds back a storage result of the first data to the terminal that sends the data storage request.

In an example, the second indication information includes P pieces of indication sub-information, and the indication sub-information indicates that the third node has stored one sub-key. Each of the P third nodes sends respective indication sub-information to the first node, so that the first node learns that the P third nodes have stored the P sub-keys.

In another example, each of the P third nodes sends respective indication sub-information to the second node. After the second node receives the indication sub-information of each of the P third nodes, the second node sends one piece of second indication information to the first node, where the piece of second indication information indicates that the P third nodes have stored the P sub-keys.

An embodiment of this application further provides a node determining method. The method may be applied to a node determining device or a chip in the node determining device. For example, the node determining device may be any node in a distributed storage network.

FIG. 4 is a schematic flowchart of a node determining method according to an embodiment of this application. The node determining method includes the following steps.

401: Split a first task into P sub-tasks.

Specifically, P is a positive integer greater than 1. The first task may include a storage task or a computing task, where the storage task is used to store data, and the computing task is used to process the data.

There may be many methods for splitting the first task. For example, splitting the storage task to obtain P sub-tasks may be understood as splitting to-be-stored data to obtain P fragments, for example, splitting the data by using an algorithm such as an information dispersal algorithm. An algorithm for splitting the data is not particularly limited. For another example, the computing task is split to obtain P computing sub-tasks. Similarly, an algorithm for splitting the computing task is not particularly limited.

402: Determine P nodes in a distributed storage network based on a first value.

The first value includes any one of the following: a digest corresponding to data to be processed by the first task, a first preset value, a first data digest, or a value stored in a distributed ledger technology DLT network, and the first data digest is a data digest of data stored in the DLT network. For specific descriptions of the first value herein, refer to the descriptions of the first value in the foregoing data storage method. Details are not described again.

In this embodiment of this application, the P nodes configured to execute the P sub-tasks in the distributed storage network may be determined based on the first value. A method for determining the P nodes is very convenient and effective.

In a possible implementation, an ID of an $i^{th}$ node in the P nodes is a hash operation value of a second value, the second value is a sum of an ID of an $(i-1)^{th}$ node and a second preset value, or the second value is a sum of an ID of an $(i-1)^{th}$ node and a preset function value, and the preset function value is related to i. An ID of a $1^{st}$ node in the P nodes is a hash operation value of the first value.

In a possible implementation, with reference to FIG. 4, the node determining method further includes the following step.

403: Send the P sub-tasks to the P nodes respectively.

Specifically, when the first task is a storage task, the node determining device sends the P fragments to the P nodes respectively, so that each node stores one fragment. When the first task is a computing task, the node determining device sends the P computing sub-tasks to the P nodes respectively, so that each node processes one computing sub-task. Specifically, for a method for sending the P fragments or the P computing sub-tasks by the node determining device, refer to the foregoing descriptions of sending the P fragments by the second node. Details are not described again.

The following describes an apparatus provided in embodiments of this application.

FIG. 5 is a diagram of a structure of a first node according to an embodiment of this application. The first node 500 includes an encryption module 501, a sending module 502, and a receiving module 503.

The encryption module 501 is configured to encrypt first data to obtain encrypted data.

The sending module 502 is configured to send a data storage request to a second node. The second node is any node in a distributed storage network, and the data storage request includes the encrypted data.

The receiving module 503 is configured to receive feedback information. The feedback information indicates that P third nodes have stored P fragments, and the P fragments are obtained by splitting the encrypted data. At least M fragments in the P fragments are used to recover the encrypted data. The P third nodes are nodes in the distributed storage network, P and M are positive integers greater than 1, and M is less than P.

For example, the encryption module 501 may be implemented by a processor, the sending module 502 may be implemented by a transmitter, and the receiving module 503 may be implemented by a receiver. Optionally, the sending module 502 and the receiving module 503 may alternatively be integrated into a transceiver.

In a possible embodiment, the sending module 502 is further configured to send P sub-keys to the P third nodes. The P sub-keys are obtained by splitting a first key used to encrypt the first data, and at least M sub-keys in the P sub-keys are used to recover the first key.

In a possible implementation, the data storage request further includes a data name of the first data, and the data name corresponds to a data digest of the encrypted data.

In a possible implementation, the sending module 502 is further configured to send a data registration request to a first network, where the data registration request includes the data name of the first data and the data digest of the encrypted data.

In a possible implementation, the data registration request further includes first indication information, the first indication information is used to determine P, and the first indication information corresponds to the data name.

In a possible implementation, the receiving module 503 is further configured to receive second indication information. The second indication information indicates that the P third nodes have stored the P sub-keys. The first node sends third indication information to the first network, where the third indication information indicates that storage of the first data is completed, and the third indication information corresponds to the data name.

For specific descriptions of the first node, refer to the descriptions of the first node side in the foregoing data storage method. Details are not described herein again.

An embodiment of this application further provides a second node, and the second node is any node in a distributed storage network.

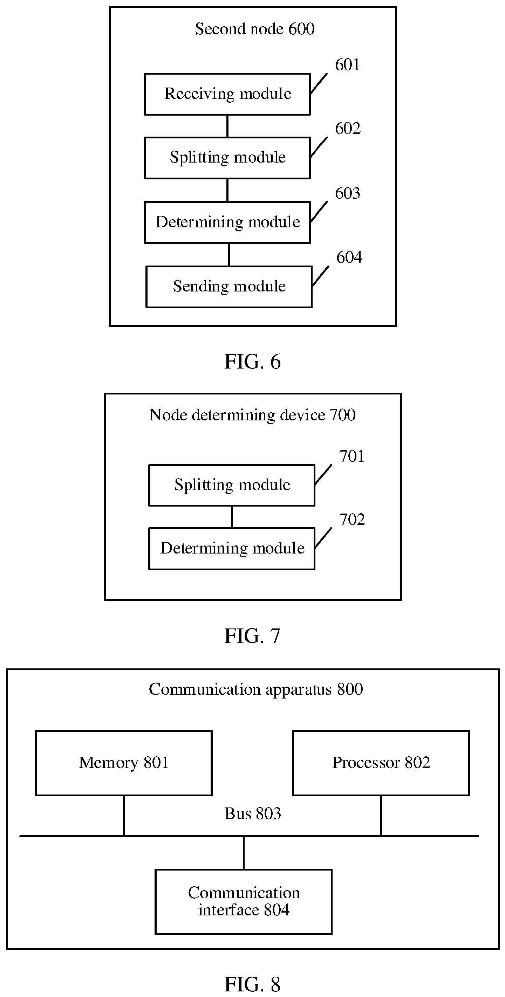

FIG. 6 is a diagram of a structure of a second node according to an embodiment of this application. The second node 600 includes a receiving module 601, a splitting module 602, a determining module 603, and a sending module 604.

The receiving module 601 is configured to receive a data storage request sent by a first node. The data storage request includes encrypted data, and the encrypted data is obtained by the first node by encrypting first data.

The splitting module 602 is configured to split the encrypted data into P fragments. At least M fragments in the P fragments are used to recover the encrypted data, P and M are positive integers greater than 1, and M is less than P.

The determining module 603 is configured to determine P third nodes in a distributed storage network.

The sending module 604 is configured to send the P fragments to the P third nodes respectively.

For example, the receiving module 601 may be implemented by a receiver, the splitting module 602 and the determining module 603 may be implemented by a processor, and the sending module 604 may be implemented by a transmitter. Optionally, the sending module 604 and the receiving module 601 may alternatively be integrated into a transceiver.

In a possible implementation, the determining module 603 is specifically configured to:
determine the P third nodes based on a first value. The first value includes any one of the following: a data digest of the encrypted data, a first preset value, a first data digest, or a value stored in a distributed ledger technology DLT network, and the first data digest is a data digest of data stored in the DLT network.

In a possible implementation, an identity ID of an $i^{th}$ third node in the P third nodes is a hash operation value of a second value. The second value is a sum of an ID of an $(i-1)^{th}$ second node and a second preset value, or the second value is a sum of an ID of an $(i-1)^{th}$ second node and a preset function value, and the preset function value is related to i. An ID of a $1^{st}$ third node in the P third nodes is a hash operation value of the first value.

In a possible implementation, the data storage request further includes a data name of the first data, and the second node further includes:

an obtaining module, configured to obtain, based on the data name, the data digest of the encrypted data corresponding to the data name; and
a verification module, configured to verify correctness of the encrypted data based on the data digest.

In a possible implementation, the obtaining module is further configured to obtain, based on the data name, first indication information corresponding to the data name. The first indication information is used to determine P.

In a possible implementation, in the aspect of obtaining, based on the data name, the data digest of the encrypted data corresponding to the data name, the obtaining module is specifically configured to:

send a digest request to a first network, where the digest request includes the data name; and
receive the data digest that is of the encrypted data corresponding to the data name and that is sent by the first network in response to the digest request.

In a possible implementation, in the aspect of obtaining, based on the data name, the first indication information corresponding to the data name, the obtaining module is specifically configured to:
obtain, from the first network based on the data name, the first indication information corresponding to the data name.

For specific descriptions of the second node, refer to the descriptions of the second node side in the foregoing data storage method. Details are not described herein again.

An embodiment of this application further provides a data storage system. Refer to FIG. 3A. The system includes a first node, a second node, and a third node.

The first node is configured to encrypt first data to obtain encrypted data, and send a data storage request to the second node. The data storage request includes the encrypted data, and the second node is any node in a distributed storage network.

The second node is configured to split the encrypted data into P fragments, where at least M fragments in the P fragments are used to recover the encrypted data, P and M are positive integers greater than 1, and M is less than P, determine P third nodes in the distributed network, and send the P fragments to the P third nodes respectively.

The third node is configured to store one of the P fragments.

For specific descriptions of the data storage system, refer to the related descriptions of the first node, the second node, and the third node in the foregoing data storage method. Details are not described herein again.

An embodiment of this application further provides a distributed storage network. The distributed storage network includes a second node and a third node. Refer to FIG. 3A.

The second node is configured to receive a data storage request sent by a first node. The second node is any node in the distributed storage network, the first node is a node having a data storage requirement, the data storage request includes encrypted data, and the encrypted data is obtained by the first node by encrypting first data.

The second node is further configured to split the encrypted data into P fragments, where at least M fragments in the P fragments are used to recover the encrypted data.

The second node is further configured to determine P third nodes in the distributed network, and send the P fragments to the P third nodes respectively, where P and M are positive integers greater than 1, and M is less than P. The P third nodes are nodes in the distributed storage network.

Each of the P third nodes is configured to store one of the P fragments.

For specific descriptions of the distributed storage network, refer to the related descriptions of the second node and the third node in the foregoing data storage method. Details are not described herein again.

An embodiment of this application further provides a node determining device. FIG. 7 is a diagram of a structure of a node determining device according to an embodiment of this application. The node determining device 700 includes a splitting module 701 and a determining module 702.

The splitting module 701 is configured to split a first task into P sub-tasks, where P is a positive integer greater than 1.

The determining module 702 is configured to determine P nodes in a distributed storage network based on a first value. The first value includes any one of the following: a digest corresponding to data to be processed by the first task, a first preset value, a first data digest, or a value stored in a distributed ledger technology DLT network, and the first data digest is a data digest of data stored in the DLT network.

In a possible embodiment, an identity ID of an $i^{th}$ node in the P nodes is a hash operation value of a second value, the second value is a sum of an ID of an $(i-1)^{th}$ node and a preset value, or the second value is a sum of an ID of an $(i-1)^{th}$ node and a preset function value, and the preset function value is related to i. An ID of a $1^{st}$ node in the P nodes is a hash operation value of the first value.

In a possible embodiment, the node determining device 700 further includes:

a sending module, configured to send the P sub-tasks to the P nodes respectively. Each node executes one sub-task.

For specific descriptions of the node determining device, refer to the related descriptions of the foregoing node determining method. Details are not described herein again.

An embodiment of this application further provides a communication apparatus. FIG. 8 is a diagram of a structure of a communication apparatus according to an embodiment of this application. The communication apparatus 800 includes a memory 801, a processor 802, a communication interface 804, and a bus 803. The memory 801, the processor 802, and the communication interface 804 are communicatively connected to each other through the bus 803. There may be one or more memories 801, and there may be one or more processors 802.

For example, the communication apparatus 800 may be a chip or a chip system.

The memory 801 may be a read-only memory (Read-Only Memory, ROM), a static storage device, a dynamic storage device, or a random access memory (Random Access Memory, RAM). The memory 801 may store a program. When the program stored in the memory 801 is executed by the processor 802, the processor 802 is configured to perform the steps of the method in any one of the foregoing embodiments.

The processor 802 may be a general-purpose central processing unit (Central Processing Unit, CPU), a microprocessor, an application-specific integrated circuit (Application-Specific Integrated Circuit, ASIC), a graphics processing unit (Graphics Processing Unit, GPU), or one or more integrated circuits, and is configured to execute a related program, to implement the method in any one of the foregoing embodiments.

The processor 802 may alternatively be an integrated circuit chip and has a signal processing capability. In an implementation process, the steps of the method in any one of embodiments of this application may be completed by using an integrated logic circuit of hardware in the processor 802 or by using instructions in a form of software. The processor 802 may alternatively be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the method provided with reference to any one of embodiments of this application may be directly performed by a hardware decoding processor, or may be performed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory 801. The processor 802 reads information in the memory 801, and completes the method according to any one of the foregoing embodiments in combination with hardware of the processor 802.

The communication interface 804 is but is not limited to a transceiver apparatus such as a transceiver, to implement communication between the communication apparatus 800 and another device or a communication network. For example, the communication apparatus 800 may obtain first data through the communication interface 804.

The bus 803 may include a path for transmitting information between the components (for example, the memory 801, the processor 802, and the communication interface 804) of the communication apparatus 800.

It should be noted that although the communication apparatus 800 shown in FIG. 8 only shows the memory, the processor, and the communication interface, in a specific implementation process, a person skilled in the art should understand that the communication apparatus 800 further includes other components that are necessary to implement normal running. In addition, according to a specific requirement, a person skilled in the art should understand that the communication apparatus 800 may further include a hardware component for implementing another additional function. Moreover, a person skilled in the art should understand that the communication apparatus 800 may include only a component required for implementing embodiments of this application, but not necessarily include all the components shown in FIG. 8.

An embodiment of this application provides a chip system. The chip system is used for a communication apparatus, the chip system includes one or more processors, and the processor is configured to invoke computer instructions, so that the communication apparatus performs the method according to any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data storage method, wherein the method comprises the following steps:

   encrypting, by a first node, first data to obtain encrypted data;
   sending, by the first node, a data storage request to a second node, wherein the second node is any node in a distributed storage network, and the data storage request comprises the encrypted data; and
   receiving, by the first node, feedback information, wherein the feedback information indicates that P third nodes have stored P fragments, the P fragments are obtained by splitting the encrypted data, at least M fragments in the P fragments are used to recover the encrypted data, the P third nodes are nodes in the distributed storage network, P and M are positive integers greater than 1, and M is less than P.

2. The method according to claim 1, wherein the method further comprises the following step:

sending, by the first node, P sub-keys to the P third nodes, wherein the P sub-keys are obtained by splitting a first key used to encrypt the first data, and at least M sub-keys in the P sub-keys are used to recover the first key.

3. The method according to claim 1 or 2, wherein the data storage request further comprises a data name of the first data, and the data name corresponds to a data digest of the encrypted data.

4. The method according to claim 3, wherein the method further comprises the following step:
sending, by the first node, a data registration request to a first network, wherein the data registration request comprises the data name of the first data and the data digest of the encrypted data.

5. The method according to claim 4, wherein the data registration request further comprises first indication information, the first indication information is used to determine P, and the first indication information corresponds to the data name.

6. The method according to claim 4 or 5, wherein the method further comprises the following steps:

receiving, by the first node, second indication information, wherein the second indication information indicates that the P third nodes have stored the P sub-keys; and
sending, by the first node, third indication information to the first network, wherein the third indication information indicates that storage of the first data is completed, and the third indication information corresponds to the data name.

7. A data storage method, wherein the method comprises the following steps:

receiving, by a second node, a data storage request sent by a first node, wherein the second node is any node in a distributed storage network, the data storage request comprises encrypted data, and the encrypted data is obtained by the first node by encrypting first data;
splitting, by the second node, the encrypted data into P fragments, wherein at least M fragments in the P fragments are used to recover the encrypted data, P and M are positive integers greater than 1, and M is less than P;
determining, by the second node, P third nodes in the distributed storage network; and
sending, by the second node, the P fragments to the P third nodes respectively.

8. The method according to claim 7, wherein determining, by the second node, the P third nodes in the distributed storage network comprises:
determining, by the second node, the P third nodes based on a first value, wherein the first value comprises any one of the following: a data digest of the encrypted data, a first preset value, a first data digest, or a value stored in a distributed ledger technology DLT network, and the first data digest is a data digest of data stored in the DLT network.

9. The method according to claim 8, wherein an identity ID of an $i^{th}$ third node in the P third nodes is a hash operation value of a second value, the second value is a sum of an ID of an $(i-1)^{th}$ second node and a second preset value, or the second value is a sum of an ID of an $(i-1)^{th}$ second node and a preset function value, the preset function value is related to i, and an ID of a $1^{st}$ third node in the P third nodes is a hash operation value of the first value.

10. The method according to any one of claims 7 to 9, wherein the data storage request further comprises a data name of the first data, and the method further comprises the following steps:

obtaining, by the second node based on the data name, the data digest of the encrypted data corresponding to the data name; and
verifying, by the second node, correctness of the encrypted data based on the data digest.

11. The method according to claim 10, wherein the method further comprises the following step:
obtaining, by the second node based on the data name, first indication information corresponding to the data name, wherein the first indication information is used to determine P.

12. The method according to claim 10 or 11, wherein obtaining, by the second node based on the data name, the data digest of the encrypted data corresponding to the data name comprises:

sending, by the second node, a digest request to a first network, wherein the digest request comprises the data name; and
receiving, by the second node, the data digest that is of the encrypted data corresponding to the data name and that is sent by the first network.

13. The method according to claim 12, wherein obtaining, by the second node based on the data name, the first indication information corresponding to the data name comprises:
obtaining, by the second node from the first network based on the data name, the first indication information corresponding to the data name.

**14.** A data storage method, wherein the method is applied to a data storage system, the system comprises a first node, a second node, and a third node, and the method comprises the following steps:

encrypting, by the first node, first data to obtain encrypted data, and sending a data storage request to the second node, wherein the data storage request comprises the encrypted data, and the second node is any node in a distributed storage network;

splitting, by the second node, the encrypted data into P fragments, wherein at least M fragments in the P fragments are used to recover the encrypted data, determining P third nodes in the distributed network, and sending the P fragments to the P third nodes respectively, wherein P and M are positive integers greater than 1, M is less than P, and the P third nodes are nodes in the distributed storage network; and

storing, by each of the P third nodes, one of the P fragments.

**15.** The method according to claim 14, wherein the method further comprises the following steps:

receiving, by the first node, feedback information, wherein the feedback information indicates that the P third nodes have stored the P fragments;

sending, by the first node, P sub-keys to the P third nodes, wherein the P sub-keys are obtained by splitting a first key used to encrypt the first data, and at least M sub-keys in the P sub-keys are used to recover the first key; and

storing, by each of the P third nodes, one of the P sub-keys.

**16.** The method according to claim 14 or 15, wherein the data storage request further comprises a data name of the first data, and the method further comprises the following steps:

obtaining, by the second node based on the data name, a data digest of the encrypted data corresponding to the data name; and

verifying, by the second node, correctness of the encrypted data based on the data digest.

**17.** The method according to claim 16, wherein the method further comprises the following step:

obtaining, by the second node based on the data name, first indication information corresponding to the data name, wherein the first indication information is used to determine P.

**18.** The method according to claim 17, wherein the data storage system further comprises a first network, and obtaining, by the second node based on the data name, the data digest of the encrypted data corresponding to the data name comprises:

sending, by the second node, a digest request to the first network, wherein the digest request comprises the data name; and

receiving, by the second node, the data digest that is of the encrypted data corresponding to the data name and that is sent by the first network.

**19.** The method according to claim 18, wherein the second node receives the first indication information that corresponds to the data name and that is sent by the first network in response to the digest request.

**20.** The method according to claim 18 or 19, wherein the method further comprises the following step:

sending, by the first node, a data registration request to the first network, wherein the data registration request comprises the data name of the first data and the data digest of the encrypted data.

**21.** The method according to claim 20, wherein the data registration request further comprises the first indication information used to determine P.

**22.** The method according to any one of claims 14 to 21, wherein determining, by the second node, the P third nodes in the distributed storage network comprises:

determining, by the second node, the P second nodes based on a first value, wherein the first value comprises any one of the following: the data digest of the encrypted data, a first preset value, a first data digest, or a value stored in a distributed ledger technology DLT network, and the first data digest is a data digest of data stored in the DLT network.

**23.** The method according to claim 22, wherein an identity ID of an $i^{th}$ third node in the P third nodes is a hash operation value of a second value, the second value is a sum of an ID of an $(i-1)^{th}$ third node and a second preset value, or the second value is a sum of an ID of an $(i-1)^{th}$ third node and a preset function value, the preset function value is related to i, and an ID of a $1^{st}$ third node in the P third nodes is a hash operation value of the first value.

**24.** A node determining method, wherein the method comprises the following steps:

splitting a first task into P sub-tasks, wherein P is a positive integer greater than 1; and

determining P nodes in a distributed storage network based on a first value, wherein the first value comprises any one of the following: a digest corresponding to data to be processed by the first task, a first preset value, a first data digest, or a value stored in a distributed ledger technology DLT network, and the first data digest is a data digest of data stored in the DLT network.

25. The method according to claim 24, wherein an identity ID of an $i^{th}$ node in the P nodes is a hash operation value of a second value, the second value is a sum of an ID of an $(i-1)^{th}$ node and a second preset value, or the second value is a sum of an ID of an $(i-1)^{th}$ node and a preset function value, the preset function value is related to i, and an ID of a $1^{st}$ node in the P nodes is a hash operation value of the first value.

26. A first node, comprising:

an encryption module, configured to encrypt first data to obtain encrypted data;
a sending module, configured to send a data storage request to a second node, wherein the second node is any node in a distributed storage network, and the data storage request comprises the encrypted data; and
a receiving module, configured to receive feedback information, wherein the feedback information indicates that P third nodes have stored P fragments, the P fragments are obtained by splitting the encrypted data, at least M fragments in the P fragments are used to recover the encrypted data, the P third nodes are nodes in the distributed storage network, P and M are positive integers greater than 1, and M is less than P.

27. A second node, wherein the second node is any node in a distributed storage network, and the second node comprises:

a receiving module, configured to receive a data storage request sent by a first node, wherein the data storage request comprises encrypted data, and the encrypted data is obtained by the first node by encrypting first data;
a splitting module, configured to split the encrypted data into P fragments, wherein at least M fragments in the P fragments are used to recover the encrypted data, P and M are positive integers greater than 1, and M is less than P;
a determining module, configured to determine P third nodes in the distributed storage network; and
a sending module, configured to send the P fragments to the P third nodes respectively.

28. A data storage system, wherein the system comprises a first node, a second node, and a third node, wherein

the first node is configured to encrypt first data to obtain encrypted data, and send a data storage request to the second node, wherein the data storage request comprises the encrypted data, and the second node is any node in a distributed storage network;
the second node is configured to split the encrypted data into P fragments, wherein at least M fragments in the P fragments are used to recover the encrypted data, P and M are positive integers greater than 1, and M is less than P, determine P third nodes in the distributed storage network, and send the P fragments to the P third nodes respectively; and
the third node is configured to store one of the P fragments.

29. A node determining device, wherein the device comprises:

a splitting module, configured to split a first task into P sub-tasks, wherein P is a positive integer greater than 1; and
a determining module, configured to determine P nodes in a distributed storage network based on a first value, wherein the first value comprises any one of the following: a digest corresponding to data to be processed by the first task, a first preset value, a first data digest, or a value stored in a distributed ledger technology DLT network, and the first data digest is a data digest of data stored in the DLT network.

30. A communication apparatus, wherein the communication apparatus comprises one or more processors and one or more memories, the one or more memories are coupled to the one or more processors, the one or more memories are configured to store computer program code, the computer program code comprises computer instructions, and when the one or more processors execute the computer instructions, the communication apparatus is enabled to perform the method according to any one of claims 1 to 25.

31. A computer-readable storage medium, wherein the computer-readable storage medium stores instructions, and when the instructions are executed by a processor, the method according to any one of claims 1 to 25 is implemented.

32. A computer program product comprising a computer program, wherein when the computer program is run on a processor, the method according to any one of claims 1 to 25 is implemented.

FIG. 1

FIG. 2

FIG. 3A

FIG. 3B

FIG. 3C

FIG. 3D

$$
\begin{bmatrix} D_1 \\ D_2 \\ D_3 \\ D_4 \\ D_5 \end{bmatrix} = \begin{bmatrix} & & & & \\ 1 & 0 & 0 & 0 & 0 \\ 0 & 1 & 0 & 0 & 0 \\ & & & & \\ 0 & 0 & 1 & 0 & 0 \end{bmatrix} * \begin{bmatrix} D_2 \\ D_3 \\ D_5 \\ C_1 \\ C_3 \end{bmatrix}
$$

$$D \qquad\qquad B^{r-1} \qquad\qquad \textit{No fault}$$

**FIG. 3E**

401 Split a first task into P sub-tasks

402 Determine P nodes in a distributed storage network based on a first value

403 Send the P sub-tasks to the P nodes respectively

**FIG. 4**

First node 500

501 Encryption module

502 Sending module

503 Receiving module

**FIG. 5**

Second node 600

Receiving module — 601

Splitting module — 602

Determining module — 603

Sending module — 604

FIG. 6

Node determining device 700

Splitting module — 701

Determining module — 702

FIG. 7

Communication apparatus 800

Memory 801

Processor 802

Bus 803

Communication interface 804

FIG. 8

## INTERNATIONAL SEARCH REPORT

| International application No. |
|---|
| **PCT/CN2023/071325** |

| A. | CLASSIFICATION OF SUBJECT MATTER |
|---|---|
| | H04L9/32(2006.01)i |

According to International Patent Classification (IPC) or to both national classification and IPC

| B. | FIELDS SEARCHED |
|---|---|

Minimum documentation searched (classification system followed by classification symbols)

    IPC： G06F,H04L

Documentation searched other than minimum documentation to the extent that such documents are included in the fields searched

Electronic data base consulted during the international search (name of data base and, where practicable, search terms used)

    CNTXT, ENTXTC, WPABSC, CNKI, 3GPP, IEEE: 分布式, 分片, 恢复, 加密, 秘钥, 存储, 摘要, 子节点, 子秘钥, 子任务, DLT, distribut+, shard, fragment, stor+, restore, encrypt+, split, recover, key, node, tasks, abstract

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2022038273 A1 (SAMSUNG SDS CO., LTD.) 03 February 2022 (2022-02-03) description, paragraphs 44-124 | 1-32 |
| Y | WO 2021209966 A1 (UVUE LTD.) 21 October 2021 (2021-10-21) description, paragraphs 33-73, and figures 1-3 | 1-32 |
| Y | CN 109831487 A (PING AN TECHNOLOGY (SHENZHEN) CO., LTD.) 31 May 2019 (2019-05-31) description, paragraphs 29-101 | 3-6, 8-13, 16-23, 25 |
| Y | US 2021111889 A1 (ATAKAMA LLC) 15 April 2021 (2021-04-15) description, paragraphs 46-83 | 1-32 |
| A | CN 109885256 A (PING AN TECHNOLOGY (SHENZHEN) CO., LTD.) 14 June 2019 (2019-06-14) entire document | 1-32 |
| A | WO 2022083871 A1 (QPQ LTD.) 28 April 2022 (2022-04-28) entire document | 1-32 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 June 2023** | **21 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/071325**

| Patent document cited in search report | | | Publication date (day/month/year) | Patent family member(s) | | | Publication date (day/month/year) |
|---|---|---|---|---|---|---|---|
| US | 2022038273 | A1 | 03 February 2022 | KR | 20220014095 | A | 04 February 2022 |
| | | | | EP | 3945443 | A1 | 02 February 2022 |
| WO | 2021209966 | A1 | 21 October 2021 | EP | 3896901 | A1 | 20 October 2021 |
| CN | 109831487 | A | 31 May 2019 | WO | 2020143317 | A1 | 16 July 2020 |
| US | 2021111889 | A1 | 15 April 2021 | US | 2022216983 | A1 | 07 July 2022 |
| CN | 109885256 | A | 14 June 2019 | WO | 2020151323 | A1 | 30 July 2020 |
| WO | 2022083871 | A1 | 28 April 2022 | | None | | |